# EUROPÄISCHE PATENTSCHRIFT

(11) **EP 3 172 641 B1**
(45) Veröffentlichungstag und Bekanntmachung des Hinweises auf die Patenterteilung: **08.04.2020**
(21) Anmeldenummer: 15738306.8
(22) Anmeldetag: 10.07.2015
(51) Int. Cl.: G05G 5/03, G06F 3/01, G05G 1/02, G06F 3/0362

(54) **BEDIENEINHEIT FÜR EIN ELEKTRISCHES GERÄT**
CONTROL UNIT FOR AN ELECTRICAL APPLIANCE
UNITÉ DE COMMANDE D'APPAREIL ÉLECTRIQUE

(30) Priorität: 22.07.2014 DE 102014214262
(43) Veröffentlichungstag der Anmeldung: 31.05.2017
(73) Patentinhaber: Behr-Hella Thermocontrol GmbH, 70469 Stuttgart (DE)
(72) Erfinder: FUST, Winfried, 59557 Lippstadt (DE); STEINKAMP, Michael, 59557 Lippstadt (DE)
(74) Vertreter: dompatent von Kreisler Selting Werner - Partnerschaft von Patent- und Rechtsanwälten mbB
(86) Internationale Anmeldenummer: PCT/EP2015/065843
(87) Internationale Veröffentlichungsnummer: WO 2016/012277

(56) Entgegenhaltungen:
- DE-A1-102008 058 568
- US-A1- 2006 256 075
- US-A1- 2010 149 111
- US-A1- 2011 291 947

## Beschreibung

Die Erfindung betrifft eine Bedieneinheit für ein elektrisches Gerät, bei dem es sich insbesondere um eine Fahrzeugkomponente wie z.B. eine Heizungs-, Lüftungs- und/oder Klimaanlage handelt.

Insbesondere bei Bedieneinheiten für Fahrzeugkomponenten setzen sich mehr und mehr Bedienkonzepte durch, bei denen ein Bedienelement zwecks Betätigung lediglich um einen relativ kurzen Weg niedergedrückt zu werden braucht. Um der das Bedienelement betätigenden Person die vorschriftsmäßige Betätigung des Bedienelements zu signalisieren, erfolgt eine taktile Rückmeldung in Form einer erzwungenen Vibrationsbewegung des Bedienelements. Derartige Bedienelemente werden auch als Force Sense/Force Feedback-Systeme Bezeichnet, da sie zum einen die Betätigungskraft oder das Überschreiten einer Mindestbetätigungskraft erfassen und zum anderen eine Rückmeldung dessen durch eine Krafteinleitung auf das Bedienelement erzeugen.

Derartige Systeme sind z. B. in DE-A-10 2011 106 051, DE-A-10 2008 058 568 und DE-A-10 2011 082 143 beschrieben.

Eine gewisse Schwierigkeit bei der Umsetzung derartiger Systeme besteht darin, dass die Lagerung des Bedienelements vergleichsweise aufwendig ist. Denn zum einen muss die auf das Bedienelement wirkende Betätigungskraft erfasst werden, um eine Betätigung des Bedienelements zu detektieren, und zum anderen muss das Bedienelement für die taktile Rückmeldung beweglich gelagert sein.

US 2011/0291947 A beschreibt eine Bedieneinheit für ein elektrisches Gerät mit den Merkmalen des Oberbegriffs des Anspruchs 1, wobei das Bedienelement niederdrückbar ist und sich über einem Abstützelement elastisch bewegbar abstützt. Das Abstützelement ist von einem Aktuator quer zur Betätigungsrichtung bewegbar.

Aufgabe der Erfindung ist es, eine Bedieneinheit für ein elektrisches Gerät, insbesondere für eine Fahrzeugkomponente wie z.B. eine Heizungs-, Lüftungs- und/oder Klimaanlage zu schaffen, wobei die Bedieneinheit einen vereinfachten mechanischen Aufbau aufweist.

Zur Lösung dieser Aufgabe wird mit der Erfindung eine Bedieneinheit für ein elektrisches Gerät, insbesondere eine Fahrzeugkomponente wie z.B. eine Heizungs-, Lüftungs- und/oder Klimaanlage vorgeschlagen, wobei die Bedieneinheit versehen ist mit den Merkmalen des Anspruchs 1. Einzelne Ausgestaltungen der Erfindung sind Gegenstand der Unteransprüche.

Nach der Erfindung bewegt ein Aktuator das Bedienelement nach dessen vorschriftsmäßiger Betätigung lateral und damit in einer zur Betätigungsrichtung im Wesentlichen orthogonalen Richtung. Diese Bewegung kann oszillierend sein. Das Bedienelement selbst ist in Betätigungsrichtung niederdrückbar und an einem Abstützelement elastisch abgestützt. Ein Sensor erfasst die Betätigung des Bedienelements, und zwar entweder über eine Wegerkennung oder aber über eine Krafterkennung. Der Sensor liefert sein Ausgangssignal an eine Auswerte- und Ansteuereinheit, in der beispielsweise detektiert wird, dass ab einer bestimmten Messsignalgröße eine vorschriftsmäßige Betätigung des Bedienelements gegeben ist. In diesem Augenblick kann dann der Aktuator das Bedienelement lateral, d.h. quer zur Betätigungsrichtung bewegen. Hierbei ist es möglich, dass der Aktuator entweder auf das Bedienelement direkt oder aber auf das Abstützelement einwirkt, welches aufgrund seiner mechanischen Kopplung mit dem Bedienelement dann bei seiner Lateralbewegung das Bedienelement mitnimmt.

Nach der Erfindung ist das Abstützelement an mindestens zwei von einem Widerlagerelement aufragenden Abstützarmen gelagert, die in Erstreckung der Betätigungsrichtung des Bedienelements verlaufen, wobei die Abstützarme jeweils an ihren beiden Enden zwecks Bewegung des Abstützelements durch den Aktuator, insbesondere elastisch beweglich mit dem Abstützelement und dem Widerlagerelement verbunden sind. Dadurch, dass die Abstützarme, über die das Abstützelement an einem Widerlagerelement ruht, in Betätigungsrichtung des Bedienelements verlaufen, ist das Abstützelement bezogen auf diese Dimension also insoweit starr gelagert.

Sinngemäß erfolgt also nach dem erfindungsgemäßen Konzept bei Betätigung eines Bedienelements mit einer (Mindest-)Betätigungskraft bzw. mit einem (Mindest-)Betätigungsweg (Force Sense) senkrecht zur Oberfläche, d.h. zum Bedienfeld des Bedienelements, eine Rückmeldung der Betätigung durch eine beschleunigte Bewegung des Bedienelements in lateraler Richtung (Force Feedback), also orthogonal zur Wirkrichtung der Betätigungskraft, d. h. im Wesentlichen in Erstreckung der Bedienoberfläche des Bedienelements, was dem Benutzer die Betätigung des Bedienelements haptisch und taktil signalisiert.

Die Lagerung des Bedienelements ist bezogen auf das Abstützelement in Betätigungsrichtung und entgegengesetzt dazu elastisch, wobei diese Lagerung so lange starr hinsichtlich lateraler Bewegungen des Bedienelements sein sollte, bis der Aktuator die laterale Bewegung des Bedienelements erzwingt. Insoweit nutzt also die erfindungsgemäße Bedieneinheit eine spielfreie elastische Lagerung für das Bedienelement mit Kraft-/Wegerkennung in Niederdrückrichtung des Bedienelements und taktiler Rückmeldung der Betätigung durch Lateralbewegung des Bedienelements quer zu dessen Betätigungsrichtung.

Besonders zweckmäßig kann es sein, wenn jeder Abstützarm Z-förmig oder U-förmig ausgestaltet ist und einen Mittenabschnitt, der in Erstreckung der Betätigungsrichtung des Bedienelements verläuft, und zwei jeweils von einem anderen Ende des Mittenabschnitts von diesem rechtwinklig und bezogen aufeinander gegen- oder gleichsinnig abstehende Befestigungsabschnitte aufweist, von denen jeweils der eine mit dem Abstützelement und jeweils der andere mit dem Widerlagerelement verbunden ist, wobei jeder Abstützarm im Eckbereich zwischen dem Mittenabschnitt und jedem der Befestigungsabschnitte durch eine gegenüber den angrenzenden Bereichen dieser Abschnitte der Abstützarme verringerte Dicke und/oder Breite flexibel gestaltet ist. Wie bereits oben erwähnt sollte die Anlenkung des Abstützelements lateral beweglich sein, aber in Betätigungsrichtung starr. Das bedeutet, dass die Enden einerseits mit dem Abstützelement und andererseits mit dem Widerlagerelement verbunden sind, also eine gewisse Flexibilität in lateral zur Betätigungsrichtung verlaufender Erstreckung aufweisen. Dies gelingt auf besonders einfache konstruktive Art und Weise durch die Ausgestaltung eines jeden Abstützarms mit einem in Betätigungsrichtung des Bedienelements verlaufenden Mittenabschnitt, an dessen beiden Enden sich vom Mittenabschnitt insbesondere rechtwinklig abstehende Befestigungsabschnitte erstrecken.

Die Befestigungsabschnitte können sowohl zu einer gemeinsamen Seite des Mittenabschnitts verlaufen, womit der Abstützarm dann im Wesentlichen eine U-förmige Gestalt aufweist, oder aber zu den gegenüberliegenden Seiten des Mittenabschnitts von diesem absteht, womit der Abstützarm dann eine Z-förmige Gestalt aufweist. In beiden Fällen von Bedeutung ist, dass der Übergangsbereich zwischen Mittenabschnitt und Befestigungsabschnitt zwecks Ermöglichung eines Scherens des Abstützarms, also einer zumindest geringfügigen Kippbewegung des Mittenabschnitts zu beiden Seiten flexibel ausgestaltet ist. Dies gelingt bei einer bevorzugten Ausgestaltung der Erfindung durch filmscharnierartige Ausgestaltungen in den Eckbereichen zwischen dem Mittenabschnitt und jedem der beiden Befestigungsabschnitte. Eine derartige flexible Ausgestaltung kann durch eine Verringerung der Dicke und/oder Breite des Abstützarms in den Eckenbereichen bzw. benachbart dazu realisiert werden.

Insoweit von Vorteil kann es sein, wenn jeder Eckenbereich eines Abstützarms eine Innenfläche und eine Außenfläche aufweist, von denen jede jeweils zwei rechtwinklig zueinander verlaufende Flächenabschnitte aufweist, wobei die Innenfläche und/oder die Außenfläche eine nutartige Vertiefung aufweist und/oder, wenn der Verbindungsbereich, an dem die beiden Flächenabschnitte der Innenfläche und/oder die beiden Flächenabschnitte der Außenfläche aneinandergrenzen, eine nutartige Vertiefung aufweist, wobei die nutartige Vertiefung an der Innenfläche oder an der Außenfläche oder an der Außenfläche und dem Verbindungsbereich der Innenfläche gegenüberliegend angeordnet ist.

Neben z. B. Z- oder U-förmigen Abstützelementen eignen sich auch solche Elemente, die gelenkig mit dem Bedienelement und dem Widerlagerelement gekoppelt sind, also große Steifigkeit in Betätigungsrichtung und eine Flexibilität quer dazu erlauben.

Zweckmäßig ist es, wenn der Abstützarm Kunststoffmaterial aufweist. Aber auch andere Werkstoffe können für die Abstützarme eingesetzt werden, sofern diese Werkstoffe eine elastische Beweglichkeit der Abstützarme in den Eckenbereichen zwischen den Mittenabschnitten und den Befestigungsabschnitten erlauben. Diese Elastizität macht es möglich, dass die Abstützarme nach einer seitlichen Auslenkung ihrer Mittenabschnitte (laterale Bewegung des Bedienelements als taktile Rückmeldung einer Bedienelement-Betätigung) selbsttätig wieder in ihre Ausgangsposition zurückkehren, in der die Mittenabschnitte wieder in Betätigungsrichtung des Bedienelements verlaufen und damit die starre Lagerung des Abstützelements garantieren, was wiederum für das haptische Verhalten des Bedienelements bei seiner Betätigung (Krafteinwirkung in Betätigungsrichtung) von Vorteil ist. In diesem Zusammenhang kann es von Vorteil sein, ein Dämpfungselement zum Dämpfen der durch den Aktuator verursachten Bewegung des Bedienelements beim Abklingen derselben nach einer Deaktivierung des Aktuators vorzusehen.

Idealerweise dämpft dieses Dämpfungselement oder aber das Abstützelement, das somit entsprechende Dämpfungseigenschaften aufweisen sollte, die insbesondere oszillierende Lateralbewegung des Bedienelements ohne weiteres Überschwingen, wenn der Aktuator deaktiviert wird.

Als Sensor für die Detektion des Niederdrückens des Bedienelements oder der Krafteinleitung auf das Bedienelement eigenen sich kapazitiv, induktiv, ohmsch oder optisch arbeitende Sensoren. Ähnlich verhält es sich mit den Aktuatoren, die beispielsweise kapazitiv, induktiv oder mechanisch in Wirkverbindung mit entweder dem Abstützelement oder dem Bedienelement stehen.

In weiterer zweckmäßiger Ausgestaltung der Erfindung kann vorgesehen sein, dass der Sensor mindestens zwei Sensorelemente zur Erfassung einer Betätigung des Bedienelements und/oder einer Krafteinwirkung auf das Bedienelement aufweist und dass in der Auswerte- und Ansteuereinheit anhand der von den beiden Sensorelementen gelieferten Signale der Ort einer Krafteinleitung auf ein Bedienfeld des Bedienelements zum Niederdrücken desselben ermittelbar ist, oder dass das Bedienelement eine berührungssensitive Bedienfläche zur Ermittlung des Orts einer Berührung des Bedienelements und/oder einer Krafteinleitung zum Niederdrücken des Bedienelements aufweist. Durch eine dieser beiden Alternativlösungen ist es also möglich, den Ort der Berührung/Betätigung auf der Bedienfläche des Bedienelements zu ermitteln. Die Bedienfläche weist hierbei im Regelfall mehrere Bediensymbole auf und es kann somit automatisch erkannt werden, auf welchem Bediensymbol beispielsweise der Finger einer Hand bei Betätigung des Bedienelements liegt.

Die Vorteile der erfindungsgemäßen Bedieneinheit lassen sich wie folgt zusammenfassen:
- Die Federrate, mit der das Bedienelement aufgehangen ist, ist in Betätigungsrichtung (d.h. normal zur Oberfläche bzw. zur Bedienfläche des Bedienelements) definiert und ist insbesondere von der Elastizität des Systems in zur Betätigungsrichtung lateraler Richtung entkoppelt.
- Die Federrate ist in Betätigungsrichtung spielfrei.
- Diese Federrate kann in Kombination mit einer Abstandsmessung zur Bestimmung der Betätigungskraft genützt werden (siehe hierzu bspw. die deutschen Patentanmeldungen 10 2013 225 436.9 und 10 2013 225 463.6, - beide eingereicht am 10.12.2013 -).
- Ein Aktuator bewegt bzw. beschleunigt das Bedienelement in mindestens einer lateralen Richtung.
- Die Federrate in Wirkrichtung des Aktuators ist durch die scherkraftweiche Lagerung des Abstützelements über dessen Abstützarme definiert.
- Auch diese Federrate ist spielfrei und zwar in Wirkrichtung des Aktuators.
- Die Abstützarme des Abstützelements erlauben in Wirkrichtung des Aktuators eine nahezu parallele Bewegung des Bedienelements. Die Aufhängung ist in Wirkrichtung des Aktuator elastisch nachgiebig, aber in Krafteinleitungsrichtung (Betätigungsrichtung) bei Betätigung des Bedienelements extrem steif, so dass eine Abstandsmessung beim Niederdrücken den Bedienelements, die wiederum der Kraftermittlung dienen könnte, nicht oder nur gering beeinflusst wird.
- Die beiden oben genannten Federraten lassen sich unabhängig voneinander einstellen.
- Beide Federn können in Ruhelage entspannt ausgeführt sein.
- Die Bewegung des Bedienelements durch den Aktuator kann durch ein Dämpfungselement gedämpft sein.
- Die Bewegung durch den Aktuator kann durch die Verwendung eines dämpfenden Materials für die Aufhängung in Bewegungsrichtung gedämpft werden.

Die Erfindung wird nachfolgend anhand von mehreren Ausführungsbeispielen und unter Bezugnahme auf die Zeichnung näher erläutert. Im Einzelnen zeigen dabei.
- Fig. 1: einen Querschnitt durch den Aufbau einer Bedieneinheit mit einem niederdrückbaren und dabei definiert gelagerten sowie quer zur Niederdrückbewegung insbesondere oszillierend bewegbaren Bedienelement im nicht betätigten Zustand,
- Fig. 2: das Bedienelement gemäß Fig. 1 im betätigten Zustand,
- Fign. 3 und 4: vergrößerte Darstellungen der speziellen in diesem Ausführungsbeispiel Z-förmigen Abstützarme, die eine große Steifigkeit bei Krafteinwirkungen in Betätigungsrichtung und eine Flexibilität/Elastizität bei Scherkrafteinwirkungen quer zur Betätigungsrichtung aufweisen, und
- Fign. 5 und 6: vergrößerte Darstellungen eines weiteren Ausführungsbeispiels der Abstützarme mit im Wesentlichen U-förmiger Gestalt.

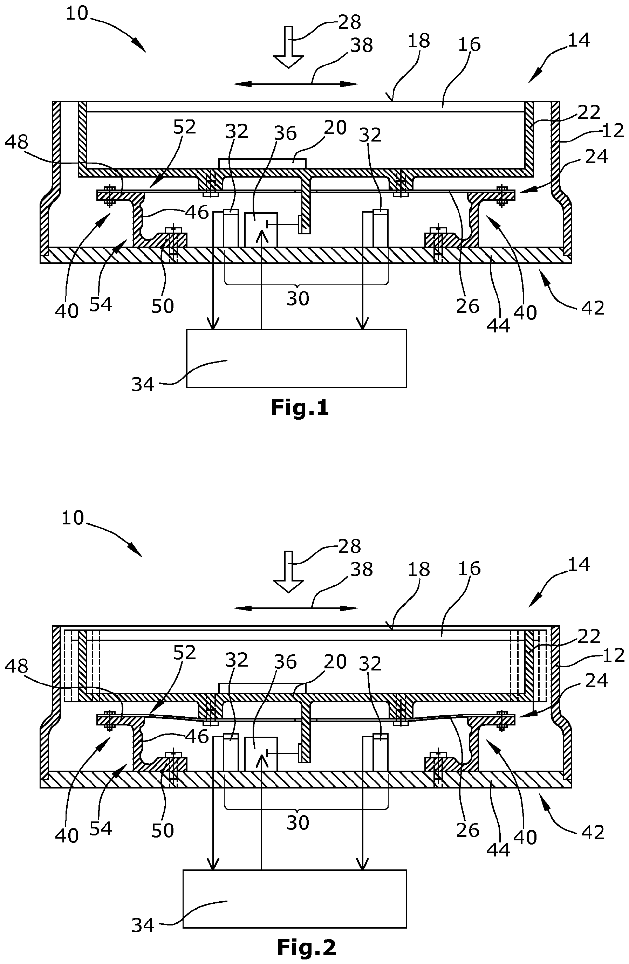

Bevor auf die Ausführungsbeispiele der Fign. 1 bis 6 eingegangen wird, sei kurz noch grundsätzlich zum Funktions- und Konstruktionsprinzip der Bedieneinheit Folgendes gesagt.

Die Bedieneinheit ist mit mindestens einem Bedienelement versehen, das in Betätigungsrichtung auf oder an einem Abstützelement elastisch gelagert ist. Wird nun auf das Bedienelement eine Betätigungskraft ausgeübt, so gibt dieses entsprechend der Federrate seiner Aufhängung (federelastische Lagerung am/im Abstützelement) nach. Ist diese Federrate und ggf. der Ort der Krafteinleitung bekannt, so kann aus der resultierenden Verschiebung des Bedienelements die Größe der einwirkenden Betätigungskraft ermittelt werden.

Nach Erkennung einer ausreichend großen Mindestbetätigungskraft oder eines ausreichend großen Hubes kann ein Aktuator aktiviert werden, der das Bedienelement quer zur Betätigungsrichtung, d. h. lateral, verschiebt. Die Bewegung durch den Aktuator wird über Abstützarme odgl. Führungselemente derart geführt, dass das Bedienelement, das lediglich kleine Auslenkungen erfährt, eine im Wesentlichen parallele Bewegung ausführt. Diese minimale Bewegung wird vom Benutzer als haptische/taktile Rückmeldung der Betätigung des Bedienelements wahrgenommen.

Gemäß Fig. 1 weist die Bedieneinheit 10 ein Gehäuse 12 auf, an dessen Oberseite 14 ein Bedienelement 16 mit einem mehrere Symbole aufweisenden Bedienfeld angeordnet ist. Das Bedienelement 16 weist beispielsweise eine Touch-Sensorik (nicht dargestellt) auf, mit der es möglich ist, den Ort der Berührung des Bedienfeldes 18 zu detektieren. Die dazu erforderliche Elektronik ist bei 20 angedeutet und befindet sich in diesem Ausführungsbeispiel innerhalb eines Bedienelementgehäuses 22. Das Bedienelement 16 ist mit einem Abstützelement 24 verbunden, das in diesem Ausführungsbeispiel als Federstahlplattenelement 26 ausgebildet ist. Dadurch ist das Bedienelement 16 bei Einleitung einer Betätigungskraft in Betätigungsrichtung (siehe den Pfeil 28) federelastisch gelagert. Über einen Sensor 30 mit in diesem Ausführungsbeispiel zwei Sensorelementen 32 lässt sich der Hub erfassen, um den sich das Bedienelement 16 bei einer Betätigung in Betätigungsrichtung 28 bewegt. Die Sensoren 32 sind mit einer Auswerte- und Ansteuereinheit 34 verbunden.

Diese Auswerte- und Ansteuereinheit steuert unter anderem auch einen Aktuator 36 zur insbesondere oszillierenden Lateralbewegung in den Richtungen des Doppelpfeils 38 an. Bei Detektion einer vorschriftsmäßigen Betätigung des Bedienelements 16 durch den Sensor 30 und die Auswerte- und Ansteuereinheit 34 wird der Aktuator 36 betätigt, der in diesem Ausführungsbeispiel mechanisch mit dem Gehäuse 22 des Bedienelements 16 gekoppelt ist, wodurch sich dann sowohl das Bedienelement 16 als auch dessen Abstützelement 26 lateral und damit seitlich oszillierend bewegt.

Die insoweit widerstreitenden Anforderungen an eine in Betätigungsrichtung 28 starre Lagerung des Abstützelements 24 und an eine Flexibilität dieser Lagerung in lateraler Richtung (Doppelpfeil 38) werden bei diesem Ausführungsbeispiel durch speziell ausgeformte Abstützarme 40 realisiert, über die das Abstützelement 24 an einem Widerlagerelement 42 ruht. In diesem Ausführungsbeispiel handelt es sich bei dem Widerlagerelement um die Bodenwand 44 des Gehäuses 12 der Bedieneinheit 10.

Wie anhand der Fign. 1 bis 4 zu erkennen ist, weist jeder Abstützarm 40 eine im Wesentlichen Z-Form auf und ist mit einem Mittenabschnitt 46, der in Betätigungsrichtung 28 verläuft, und mit zwei Befestigungsabschnitten 48, 50 versehen. Diese Befestigungsabschnitte 48, 50 ragen zu einander gegenüberliegenden Seiten von den oberen und unteren Enden des Mittenabschnitts rechtwinklig ab. Durch die in Betätigungsrichtung 28 verlaufenden Mittenabschnitte 46 erhält das Abstützelement 24 eine große Steifigkeit seiner Lagerung bei Krafteinleitungen in Betätigungsrichtung 28.

Damit nun diese Abstützarme 40 eine laterale Bewegung des Abstützelements 24 und damit des Bedienelements 16 ermöglichen, sind sie in den Eckenbereichen 52, 54 zwischen jeweils den Befestigungsabschnitten 48, 50 und dem jeweiligen Mittenabschnitt 46 flexibel und elastisch ausgebildet. Die Befestigungsabschnitte 48, 50 sind einerseits mit dem Abstützelement 24 (d. h. dem Federstahlplattenelement 26) und andererseits mit dem Widerlagerelement 42, d. h. mit der Bodenwand 44 fest verbunden. Die Elastizität dieser Abstützarme 40 bei Einwirkung von Scherkräften, wie sie durch den Aktuator 36 verursacht werden, gelingt dadurch, dass die Abstützarme 40 in ihren Eckenbereichen 52, 54 filmscharnierartig ausgebildet sind. Die in diesem Zusammenhang erforderliche Dickenreduktionen der Abstützarme 40 in den Eckenbereichen 52, 54 wird durch Nuten (d. h. nutartige Vertiefungen) 56, 58 realisiert, wie es in den Fign. 1 bis 4 gezeigt ist. Die auf diese Weise gebildeten Filmscharniere weisen eine Rückstellfähigkeit auf, die dazu führt, dass die Abstützarme 40 nach einer Deaktivierung des Aktuators 36 automatisch wieder ihre Ausgangsposition gemäß Fig. 1 einnehmen, in der ihre Mittenabschnitte 46 in Betätigungsrichtung 28 verlaufen.

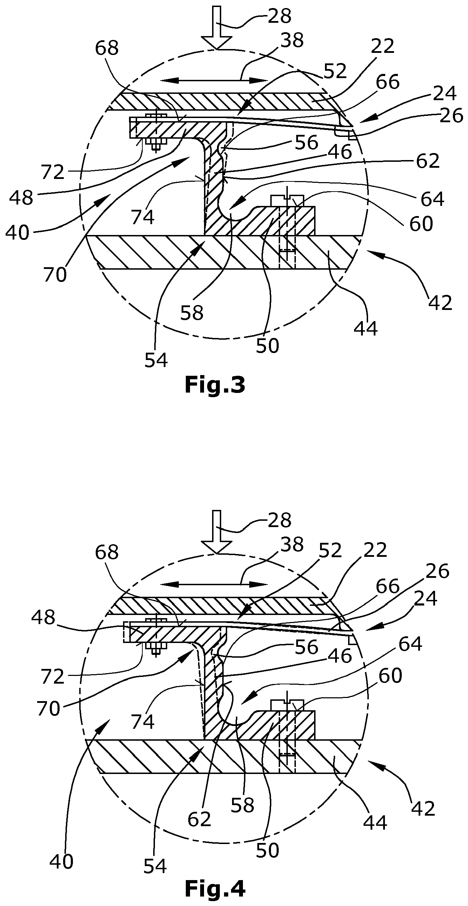

Wie insbesondere anhand der Fign. 3 und 4 zu erkennen ist, erlauben die Abstützarme 40 eine gewisse Flexibilität und Elastizität in (z. B. Oszillations-)Bewegungsrichtung 38 des Bedienelements 16 bei Rückmeldung einer Betätigung. Dabei sind die nutartigen Vertiefungen 56, 58 so angeordnet, dass sich die Vertiefungen 58 zwischen den beiden Flächenabschnitten 60, 62 der Eckeninnenfläche 64 im Übergang des Befestigungsabschnitts 50 zum Mittenabschnitt 46 befindet. Die nutartigen Vertiefungen 56 befindet sich in dem Flächenabschnitt 66 des Mittenabschnitts 46 an der Außenseite des Eckenbereichs 52 zum Befestigungsabschnitt 48 hin, und zwar im Wesentlichen dem Inneneckenbereich 70 gegenüberliegend. Dieser Inneneckenbereich 70 wird definiert durch zwei Innenflächenabschnitte 72, 74.

Alternativ zu einer Materialverjüngung bzw. auch zusätzlich zu dieser können die flexiblen Eckenbereiche 52, 54 durch eine Verkürzung der Breite der Abstützarme 40 in den Eckenbereichen 52, 54 realisiert werden.

Die Abstützarme 40 bestehen zweckmäßigerweise aus Kunststoff. Das Ausmaß der Lateralbewegungen des Bedienelements 16, verursacht durch den Aktuator 36, ist derart gering, dass das Kunststoffmaterial in den Eckenbereichen 52, 54 seine Elastizität beibehält, so dass die Rückstellfähigkeit der Mittenabschnitte 46 hinsichtlich der selbsttätigen Ausrichtung in Betätigungsrichtung 28 beibehalten bleibt.

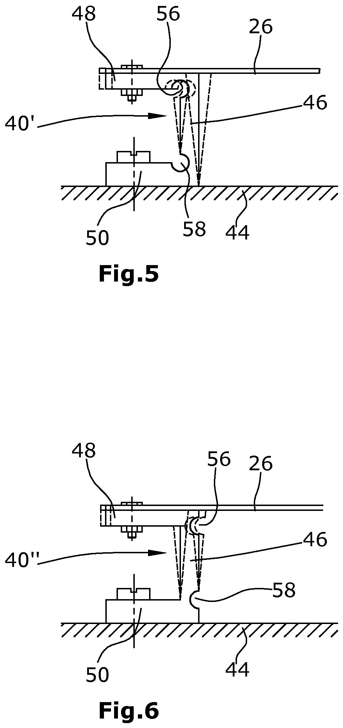

Wie die Fign. 5 und 6 zeigen, können die Abstützarme auch als im Wesentlichen U-förmige Abstützarme 40', 40" ausgebildet sein. Die Vertiefungen 56, 58 sind dabei entweder in den Inneneckenbereichen oder in den Außeneckenbereichen oder in beiden oder wechselweise in dem Inneneckenbereich und dem Außeneckenbereich ausgebildet.

### BEZUGSZEICHENLISTE

- 10: Bedieneinheit
- 12: Gehäuse der Bedieneinheit
- 14: Oberseite des Gehäuses
- 16: Bedienelement
- 18: Bedienfeld des Bedienelements
- 22: Bedienelementgehäuse
- 24: Abstützelement
- 26: Federstahlplattenelement
- 28: Betätigungsrichtung des Bedienelements
- 30: Sensor zur Erfassung einer Betätigung des Bedienelements
- 32: Sensorelemente des Sensors
- 34: Auswerte- und Ansteuereinheit
- 36: Aktuator
- 38: (Oszillations-)Bewegungsrichtung des Bedienelements
- 40: Abstützarme für das Abstützelement
- 40': Abstützarme für das Abstützelement
- 40": Abstützarme für das Abstützelement
- 42: Widerlagerelement für die Abstützarme
- 44: Bodenwand
- 46: Mittenabschnitt
- 48: Befestigungsabschnitt des Abstützarms
- 50: Befestigungsabschnitt des Abstützarms
- 52: Eckenbereich des Abstützarms
- 54: Eckenbereich des Abstützarms
- 56: Nut bzw. nutartige Vertiefung im Eckenbereich des Abstützarms
- 58: Nut bzw. nutartige Vertiefung im Eckenbereich des Abstützarms
- 60: Flächenabschnitte des Eckenbereichs
- 62: Flächenabschnitte des Eckenbereichs
- 64: Eckeninnenfläche
- 66: Flächenabschnitt des Eckenbereichs
- 70: Inneneckenbereich
- 72: Innenflächenabschnitt des Eckenbereichs
- 74: Innenflächenabschnitt des Eckenbereichs

## Patentansprüche

1. Bedieneinheit für ein elektrisches Gerät, insbesondere eine Fahrzeugkomponente wie z.B. eine Heizungs-, Lüftungs- und/oder Klimaanlage, mit
- einem Bedienelement (16), das in einer Betätigungsrichtung (28) niederdrückbar ist,
- einem mit dem Bedienelement (16) mechanisch gekoppelten Abstützelement (24), an dem sich das Bedienelement (16) in Betätigungsrichtung (28) elastisch bewegbar abstützt,
- einem Sensor (30) zur Erfassung einer Niederdrückbewegung des Bedienelements (16) und/oder zur Erfassung einer Krafteinleitung auf das Bedienelement (16),
- einem Aktuator (36) zur Bewegung des Bedienelements und
- einer mit dem Sensor (30) und dem Aktuator (36) verbundenen Auswerte- und Ansteuereinheit (34) zur Ansteuerung des Aktuators (36) bei einer von dem Sensor (30) erfassten Niederdrückbewegung des Bedienelements (16) und/oder Krafteinwirkung auf das Bedienelement (16),
- wobei das Abstützelement (24) von dem Aktuator (36) in mindestens einer quer zur Betätigungsrichtung (28) des Bedienelements (16) verlaufenden Bewegungsrichtung (38) bewegbar ist,
**dadurch gekennzeichnet,**
- **dass** das Abstützelement (24) an mindestens zwei von einem Widerlagerelement (42) aufragenden Abstützarmen (40) gelagert ist, die in Erstreckung der Betätigungsrichtung (28) des Bedienelements (16) verlaufen, wobei die Abstützarme (40) jeweils an ihren beiden Enden zwecks Bewegung des Abstützelements (24) durch den Aktuator (36) elastisch beweglich mit dem Abstützelement (24) und dem Widerlagerelement (42) verbunden sind.

2. Bedieneinheit nach Anspruch 1, **dadurch gekennzeichnet, dass** jeder Abstützarm Z-förmig oder U-förmig ausgestaltet ist und einen Mittenabschnitt (46), der in Erstreckung der Betätigungsrichtung (28) des Bedienelements (16) verläuft, und zwei jeweils von einem anderen Ende des Mittenabschnitts (46) von diesem rechtwinklig und, bezogen aufeinander, gegen- oder gleichsinnig abstehende Befestigungsabschnitte (48, 50) aufweist, von denen jeweils der eine mit dem Abstützelement (24) und jeweils der andere mit dem Widerlagerelement (42) verbunden ist, und dass jeder Abstützarm im Eckenbereich (52, 54) zwischen dem Mittenabschnitt (46) und jedem der Befestigungsabschnitte (48, 50) durch eine gegenüber den angrenzenden Bereichen dieser Abschnitte der Abstützarme (40) verringerte Dicke und/oder Breite flexibel gestaltet ist.

3. Bedieneinheit nach Anspruch 2, **dadurch gekennzeichnet, dass** jeder Eckenbereich (52, 54) eines Abstützarms eine Innenfläche und eine Außenfläche aufweist, von denen jede jeweils zwei rechtwinklig zueinander verlaufende Flächenabschnitte aufweist, und dass die Innenfläche und/oder die Außenfläche eine nutartige Vertiefung (56, 58) aufweist und/oder dass der Verbindungsbereich, an dem die beiden Flächenabschnitte der Innenfläche und/oder die beiden Flächenabschnitte der Außenfläche aneinandergrenzen, eine nutartige Vertiefung (56, 58) aufweist, wobei die nutartige Vertiefung (56, 58) an der Innenfläche oder an der Außenfläche oder an der Außenfläche dem Verbindungsbereich der Innenfläche gegenüberliegend angeordnet ist.

4. Bedieneinheit nach einem der Ansprüche 1 oder 3, **dadurch gekennzeichnet, dass** die Abstützarme (40) Kunststoffmaterial aufweisen.

5. Bedieneinheit nach einem der Ansprüche 1 bis 4, **dadurch gekennzeichnet, dass** das Abstützelement (24) als federelastisches Plattenelement (26) ausgebildet ist.

6. Bedieneinheit nach einem der Ansprüche 1 bis 5, **dadurch gekennzeichnet, dass** der Sensor (30) ein kapazitiv, induktiv, ohmsch oder optisch arbeitender Wegsensor oder Kraftsensor ist.

7. Bedieneinheit nach einem der Ansprüche 1 bis 6, **dadurch gekennzeichnet, dass** der Aktuator (36) in insbesondere kapazitiver, induktiver oder mechanischer Wirkverbindung mit entweder dem Abstützelement (24) oder dem Bedienelement (16) steht.

8. Bedieneinheit nach einem der Ansprüche 1 bis 7, **dadurch gekennzeichnet, dass** der Sensor (30) mindestens zwei Sensorelemente (32) zur Erfassung einer Betätigung des Bedienelements (16) und/oder einer Krafteinwirkung auf das Bedienelement (16) aufweist und dass in der Auswerte- und Ansteuereinheit (34) anhand der von den beiden Sensorelementen (32) gelieferten Signale der Ort einer Krafteinleitung auf eine Bedienfläche des Bedienelements (16) zum Niederdrücken desselben ermittelbar ist, oder dass das Bedienelement (16) eine berührungssensitive Bedienfläche zur Ermittlung des Orts einer Berührung des Bedienelements (16) und/oder einer Krafteinleitung zum Niederdrücken des Bedienelements (16) aufweist.

9. Bedieneinheit nach einem der Ansprüche 1 bis 8, **gekennzeichnet durch** ein Dämpfungselement zum Dämpfen der durch den Aktuator (36) verursachten Bewegung beim Abklingen derselben nach einer Deaktivierung des Aktuators (36).

## Claims

1. An operating unit for an electrical appliance, in particular for a vehicle component such as e.g. a heating, ventilation and/or air conditioning system, comprising
- an operating element (16) which can be pressed down in a direction of actuation (28),
- a support element (24) which is mechanically coupled to the operating element (16) and on which the operating element (16) is elastically supported so as to be movable in the direction of actuation (28),
- a sensor (30) for detecting a motion of the operating element (16) when the latter is pressed down, and/or for detecting a force applied to the operating element (16),
- an actuator (36) for moving the operating element, and
- an evaluation and drive unit (34) connected to the sensor (30) and to the actuator (36) for driving the actuator (36) upon press-down movement of the operating element (16) and/or application of force onto the operating element (16) as detected by the sensor (30),
- wherein the support element (24) being adapted to be moved by the actuator (36) in at least one direction of movement (38) extending transversely to the direction of actuation (28) of the operating element (16),
**characterized in that**
- the support element (24) is supported on at least two support arms (40) which project upward from an abutment element (42) and are arranged in the extension of the direction of actuation (28) of the operating element (16), wherein, for movement of the support element (24) by the actuator (36), the support arms (40) are each on both of their ends connected to the support element (24) and the abutment element (42) in a movable and particularly elastically movable manner.

2. The operating unit according to claim 1, **characterized in that** each support arm is of a Z-shaped or U-shaped design and comprises an intermediate portion (46) arranged in the extension of the direction of actuation (28) of the operating element (16), and two fastening portions (48, 50) each projecting from another end of the intermediate portion (46) at a right angle thereto and, relative to each other, in identical or opposite senses, a respective one of the fastening portions (48, 50) being connected to the support element (24) and the respective other one being connected to the abutment element (42), and that each support arm in the corner region (52, 54) between the intermediate portion (46) and each of the fastening portions (48, 50) is of a flexible design effected by a reduced thickness and/or width relative to the adjacent regions of these portions of the support arms (40).

3. The operating unit according to claim 2, **characterized in that** each corner region (52, 54) of a support arm comprises an inner surface and an outer surface, each of the inner and outer surfaces comprising respectively two mutually right-angled surface portions, and that the inner surface and/or the outer surface comprises a groove-like recess (56, 58) and/or that the connecting region where the two surface portions of the inner surface and/or the two surface portions of the outer surface are bordering on each other, comprises a groove-like recess (56, 58), wherein the groove-like recess (56, 58) is arranged on the inner surface or on the outer surface, or on the outer surface opposite to the connecting region of the inner surface.

4. The operating unit according to any one of claims 1 or 3, **characterized in that** the support arms (40) comprise plastic material.

5. The operating unit according to any one of claims 1 to 4, **characterized in that** the support element (24) is designed as a resiliently elastic plate element (26).

6. The operating unit according to any one of claims 1 to 5, **characterized in that** the sensor (30) is a position sensor or force sensor operating in a capacitive, inductive, ohmic or optical manner.

7. The operating unit according to any one of claims 1 to 6, **characterized in that** the actuator (36) is in operative connection, particularly in a capacitive, inductive or mechanical manner, with the support element (24) or the operating element (16).

8. The operating unit according to any one of claims 1 to 7, **characterized in that** the sensor (30) comprises at least two sensor elements (32) for detection of an actuation of the operating element (16) and/or of an application of force onto the operating element (16), and that, in the evaluation and drive unit (34), the site of an application of force onto an operating surface of the operating element (16) for pressing down the latter can be detected on the basis of the signals delivered by the two sensor elements (32), or that the operating element (16) comprises a touch-sensitive operating surface for detection of a site of a touch onto the operating element (16) and/or of an application of force for pressing down the operating element (16).

9. The operating unit according to any one of claims 1 to 8, **characterized by** a damping unit for dampening the movement caused by the actuator (36) when said movement is fading after deactivation of the actuator (36).

## Revendications

1. Unité de commande pour un appareil électrique, en particulier un composant de véhicule, comme par exemple un système de chauffage, de ventilation ou de climatisation, dotée
- d'un élément de commande (16), lequel peut être enfoncé dans une direction d'actionnement (28),
- d'un élément de soutien (24) couplé mécaniquement à l'élément de commande (16), sur lequel l'élément de commande (16) s'appuie de manière élastiquement mobile dans la direction d'actionnement (28),
- d'un capteur (30) destiné à saisir un mouvement d'enfoncement de l'élément de commande (16) et/ou à saisir une entrée de force sur l'élément de commande (16),
- d'un actionneur (36) pour mouvoir l'élément de commande et
- d'une unité de contrôle et de pilotage (34) raccordée au capteur (30) et à l'actionneur (36) afin de piloter l'actionneur (36) en cas de mouvement d'enfoncement de l'élément de commande (16) saisi par le capteur (30) et/ou d'exercice de force sur l'élément de commande (16),
- dans laquelle l'élément de soutien (24) peut être mû par l'actionneur (36) dans au moins une direction de mouvement (38) transversale à la direction d'actionnement (28) de l'élément de commande (16),
**caractérisée en ce que**
- l'élément de soutien (24) est posé sur au moins deux bras de soutien (40) dépassant d'un élément de contre-appui (42), lesquels parcourent l'étendue de la direction d'actionnement (28) de l'élément de commande (16), dans laquelle les bras de soutien (40) sont reliés de manière élastiquement mobile à l'élément de soutien (24) et à l'élément de contre-appui (42) respectivement à leurs deux extrémités en vue du mouvement de l'élément de soutien (24) par l'actionneur (36).

2. Unité de commande selon la revendication 1, **caractérisée en ce que** chaque bras de soutien est configuré en forme de Z ou en forme de U et comporte une section médiane (46), laquelle parcourt l'étendue de la direction d'actionnement (28) de l'élément de commande (16), et deux sections de fixation (48, 50) saillant respectivement d'une autre extrémité de la section médiane (46) à angle droit par rapport à celle-ci et dans le même sens ou en sens opposé l'une par rapport à l'autre, desquelles l'une est respectivement reliée à l'élément de soutien (24) et l'autre est respectivement reliée à l'élément de contre-appui (42), et **en ce que** chaque bras de soutien est configuré comme flexible dans les zones d'angle (52, 54) entre la section médiane (46) et chacune des sections de fixation (48, 50) par le biais d'une épaisseur et/ou largeur réduite par rapport aux zones contiguës de ces sections des bras de soutien (40).

3. Unité de commande selon la revendication 2, **caractérisée en ce que** chaque zone d'angle (52, 54) d'un bras de soutien comporte une surface interne et une surface externe, desquelles chacune comporte deux sections de surface respectivement perpendiculaires l'une par rapport à l'autre, et **en ce que** la surface interne et/ou la surface externe comporte une dépression (56, 58) de type rainure et/ou **en ce que** la zone de raccordement, sur laquelle les deux sections de surface de la surface interne et/ou les deux sections de surface de la surface externe se jouxtent, comporte une dépression (56, 58) de type rainure, dans laquelle la dépression (56, 58) de type rainure est agencée sur la surface interne ou sur la surface externe ou sur la surface externe en opposition à la zone de raccordement.

4. Unité de commande selon l'une des revendications 1 à 3, **caractérisée en ce que** les bras de soutien (40) comportent du matériau plastique.

5. Unité de commande selon l'une des revendications 1 à 4, **caractérisée en ce que** l'élément de soutien (24) est réalisé comme élément de plaque (26) élastique.

6. Unité de commande selon l'une des revendications 1 à 5, **caractérisée en ce que** le capteur (30) est un capteur de mouvement ou de force à fonctionnement capacitif, inductif, résistif ou optique.

7. Unité de commande selon l'une des revendications 1 à 6, **caractérisée en ce que** l'actionneur (36) coopère, en particulier avec un fonctionnement capacitif, inductif ou mécanique ou bien avec l'élément de soutien (24) ou bien avec l'élément de commande (16).

8. Unité de commande selon l'une des revendications 1 à 7, **caractérisée en ce que** le capteur (30) comporte au moins deux éléments de capteur (32) afin de saisir un actionnement de l'élément de commande (16) et/ou un exercice de force sur l'élément de commande (16) et **en ce que** l'endroit d'une entrée de force sur une surface de commande de l'élément de commande (16) pour l'enfoncement de celui-ci peut être déterminé dans l'unité de contrôle et de pilotage (34) à l'aide des signaux fournis par les deux éléments de capteur (32), ou **en ce que** l'élément de commande (16) comporte une surface de commande sensible au toucher afin de déterminer l'endroit où l'élément de commande (16) est touché et/ou l'endroit d'une entrée de force destinée à enfoncer l'élément de commande (16).

9. Unité de commande selon l'une des revendications 1 à 8, **caractérisée par** un élément amortisseur destiné à amortir le mouvement causé par l'actionneur (36) lors de la décroissance de celui-ci après une désactivation de l'actionneur (36).
